# EUROPEAN PATENT APPLICATION

(11) **EP 4 016 425 A1**
(43) Date of publication of application: **22.06.2022**
(21) Application number: 19941633.0
(22) Date of filing: 14.08.2019
(51) Int. Cl.: G06Q 20/06

(54) **FOREIGN-TRADE SETTLEMENT SYSTEM, FOREIGN-TRADE SETTLEMENT METHOD, AND FOREIGN-TRADE SETTLEMENT PROGRAM**

(71) Applicant: Tokio Marine & Nichido Fire Insurance Co., Ltd., Chiyoda-ku Tokyo 100-8050 (JP)
(72) Inventor: SHINYA Tetsunosuke, Tokyo 100-8050 (JP)
(74) Representative: Strehl Schübel-Hopf & Partner
(86) International application number: PCT/JP2019/031925
(87) International publication number: WO 2021/029029

(57) **Abstract**

In a trade settlement system that uses one or more computers, for a bilateral contract including both obligations of a change of name of a vesting destination from one party to another party of contract parties, the change of name accompanying a transfer of ownership of an article to be sold or purchased in a trade, and settlement using predetermined electronic money for a consideration relating to the sale and purchase, each of the one or more computers includes: a settlement processing unit that performs the settlement by using a smart contract on a blockchain; and a processing unit that processes the change of name by using the smart contract on the blockchain, in a case where the settlement has been successful.

## Description

### Technical Field

The present invention relates to a trade settlement system, a trade settlement method, and a trade settlement program.

### Background Art

Patent Literature 1 describes a technology in which "Upon receipt of a letter-of-credit issuance instruction, a transaction code is set, a record is stored in a trade transaction DB, and a letter-of-credit issuance request including the transaction code is transmitted. Upon receipt of this request, a trade transaction server sets a bank management code, and transmits a letter-of-credit issuance report including the bank management code together with the transaction code included in the request. Upon receipt of the letter-of-credit issuance report, the bank management code included in the report is stored in a record of the trade transaction DB that includes the transaction code included in the report. When bill-of-lading data has been generated, the trade transaction server adds the bank management code to the bill-of-lading data, and transmits the bill-of-lading data. Upon receipt of the bill-of-lading data, a record is stored in the bill-of-lading DB in association with a record of the trade transaction DB that includes the bank management code included in the bill-of-lading data."

### Citation List

### Patent Literature

Patent Literature 1: JP 2011-96060 A

### Summary of Invention

### Technical Problem

In the technology described above, data relating to trade transactions can be managed, but the simultaneous fulfillment of obligations fails to be guaranteed.

In trade transactions for which sale and purchase parties are present in remote places, obligations are not simultaneously fulfilled, and the sale and purchase parties have a risk of default of the counterparty. Accordingly, it is an object of the present invention to provide a technology for guaranteeing the simultaneous fulfillment of obligations in trade transactions.

### Solution to Problem

The present invention includes a plurality of solutions to at least some of the problems described above, and examples of the plurality of solutions are described below. A trade settlement system in one aspect of the present invention is a trade settlement system that uses one or more computers, in which each of the one or more computers includes, for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase: a settlement processing unit that performs the settlement by using a smart contract on a blockchain; and a processing unit that processes the change of name by using the smart contract on the blockchain, in a case where the settlement has been successful.

In the trade settlement system described above, processing of the change of name may include processing for changing a name of an owner of a predetermined shipping document including at least a bill of lading relating to the article.

In the trade settlement system described above, the predetermined shipping document may be configured as blockchain data.

In the trade settlement system described above, the settlement may include settlement that includes payment using electronic currency between a plurality of parties concerned according to trade terms.

In the trade settlement system described above, the settlement may include settlement that includes processing for paying freight of the trade to a carrier according to the trade terms by using the electronic currency.

In the trade settlement system described above, the settlement may include settlement that includes processing for paying a cargo marine premium relating to the trade to an insurer according to the trade terms by using the electronic currency.

In the trade settlement system described above, the settlement may include settlement that includes payment using virtual currency.

In the trade settlement system described above, each of a shipper node, a consignee node, and a carrier node may be configured by the one or more computers, the shipper node serving as a node of a shipper of the trade, the consignee node serving as a node of a consignee of the trade, the carrier node serving as a node of a carrier of the trade. The settlement processing unit of the consignee node may perform the settlement by remitting the consideration relating to the sale and purchase of the article to the settlement processing unit of the shipper node. The processing unit of the carrier node may process the change of name by changing a name of a predetermined shipping document from the shipper to the consignee, the predetermined shipping document including a bill of lading relating to the article to be sold or purchased in the trade.

In the trade settlement system described above, each of a shipper node, a consignee node, and a carrier node may be configured by the one or more computers, the shipper node serving as a node of a shipper of the trade, the consignee node serving as a node of a consignee of the trade, the carrier node serving as a node of a carrier of the trade. The settlement processing unit of the consignee node may perform the settlement by remitting the consideration relating to the sale and purchase of the article to the settlement processing unit of the shipper node. The settlement processing unit of the shipper node may perform the settlement by remitting freight of the trade to the settlement processing unit of the carrier node. The processing unit of the carrier node may process the change of name by changing a name of a predetermined shipping document from the shipper to the consignee, the predetermined shipping document including a bill of lading of the article to be sold or purchased in the trade.

In the trade settlement system described above, each of a shipper node, a consignee node, and a carrier node may be configured by the one or more computers, the shipper node serving as a node of a shipper of the trade, the consignee node serving as a node of a consignee of the trade, the carrier node serving as a node of a carrier of the trade. The settlement processing unit of the consignee node may perform the settlement by remitting the consideration relating to the sale and purchase of the article to the settlement processing unit of the shipper node, and may perform the settlement by remitting freight of the trade to the settlement processing unit of the carrier node. The processing unit of the carrier node may process the change of name by changing a name of a predetermined shipping document from the shipper to the consignee, the predetermined shipping document including a bill of lading of the article to be sold or purchased in the trade.

In the trade settlement system described above, an insurer node may be configured by the one or more computers, the insurer node serving as a node of an insurer of the trade. The settlement processing unit of the shipper node may perform the settlement by remitting the freight of the trade to the settlement processing unit of the carrier node, and remitting a cargo marine premium of the trade to the settlement processing unit of the insurer node.

In the trade settlement system described above, an insurer node may be configured by the one or more computers, the insurer node serving as a node of an insurer of the trade. The settlement processing unit of the consignee node may perform the settlement by remitting the consideration relating to the sale and purchase of the article to the settlement processing unit of the shipper node, and remitting a cargo marine premium of the trade to the settlement processing unit of the insurer node.

In the trade settlement system described above, an insurer node may be configured by the one or more computers, the insurer node serving as a node of an insurer of the trade. The settlement processing unit of the consignee node may perform the settlement by remitting the consideration relating to the sale and purchase of the article to the settlement processing unit of the shipper node, may perform the settlement by remitting the freight of the trade to the settlement processing unit of the carrier node, and may perform the settlement by remitting a cargo marine premium of the trade to the settlement processing unit of the insurer node.

A trade settlement method in another aspect of the present invention is a trade settlement method that uses one or more computers. Each of the one or more computers performs, for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase: a settlement processing step of performing the settlement by using a smart contract on a blockchain; and a processing step of processing the change of name by using the smart contract on the blockchain, in a case where the settlement has been successful.

A trade settlement program in another aspect of the present invention is a trade settlement program that uses one or more computers. The trade settlement program causes each of the one or more computers to perform, for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase: a settlement processing step of performing the settlement by using a smart contract on a blockchain; and a processing step of processing the change of name by using the smart contract on the blockchain, in a case where the settlement has been successful.

### Advantageous Effects of Invention

In trade transactions for which sale and purchase parties are present in remote places, obligations are not simultaneously fulfilled, and the sale and purchase parties have a risk of default of the counterparty. According to the present invention, a technology for guaranteeing the simultaneous fulfillment of obligations in trade transactions can be provided.

Problems, configurations, and effects that are different from the above will be clarified by the description provided below of embodiments.

### Brief Description of Drawings

Fig. 1 is a configuration diagram illustrating an example of a mechanism of trade settlement according to an embodiment.
Fig. 2 is a configuration diagram illustrating an example of a trade settlement system according to the embodiment.
Fig. 3 is a diagram illustrating an example of a configuration of a distributed ledger node.
Fig. 4 is a diagram illustrating an example of a data structure of an invoice.
Fig. 5 is a diagram illustrating an example of a data structure of a bill of lading.
Fig. 6 is a diagram illustrating an example of a data structure of an insurance policy request.
Fig. 7 is a diagram illustrating an example of a data structure of an insurance policy.
Fig. 8 is a diagram illustrating an example of a hardware configuration of a distributed ledger node.
Fig. 9 is a diagram illustrating an example of a detailed configuration of the trade settlement system.
Fig. 10 is a diagram illustrating an example of a flow of invoice preparation approval processing.
Fig. 11 is a diagram illustrating an example of a flow of bill-of-lading preparation approval processing.
Fig. 12 is a diagram illustrating an example of a flow of insurance policy preparation approval processing.
Fig. 13 is a diagram illustrating an example of a flow of settlement processing in the case of CIF.
Fig. 14 is a diagram illustrating an example of a flow of settlement processing in the case of CFR.
Fig. 15 is a diagram illustrating an example of a flow of settlement processing in the case of FOB.
Fig. 16 is a diagram illustrating an example of a flow of change-of-name processing.
Fig. 17 is a diagram illustrating an example of a consignee screen.
Fig. 18 is a diagram illustrating an example of a shipper screen.

### Description of Embodiments

A trade settlement system 1 to which an embodiment in one aspect of the present invention has been applied is described below with reference to the drawings. The embodiment described below is divided into a plurality of sections or embodiments, as needed for convenience, and description is provided. However, unless otherwise specified, the plurality of sections or embodiments has a relationship with each other, and one section or embodiment has a relationship of a variation, details, an additional description, or the like of part or the entirety of another section or embodiment.

In addition, in the embodiment described below, in a case where the number or the like (including the number of pieces, a numerical number, an amount, a range, and the like) of elements is referred to, the number or the like of elements is not limited to a specified number, and may be greater than or equal to the specified number or may be less than or equal to the specified number, unless otherwise specified and excluding a case where the number or the like of elements is obviously limited to the specified number in principle, and other cases.

Further, in the embodiment described below, needless to say, components (including element steps or the like) of the embodiment are not necessarily essential, unless otherwise specified and excluding a case where it can be considered that the components are obviously essential in principle, and other cases.

Similarly, in the embodiment described below, when referring to a shape, a positional relationship, or the like of a component or the like, the shape or the like of the component or the like includes, for example, a shape or the like that is substantially approximated or similar to the shape or the like of the component or the like, unless otherwise specified and excluding a case where it can be obviously considered that this is not the case in principle, and other cases. The similar is applied to the numerical number and the range that have been described above.

In addition, in all of the drawings for describing the embodiment, as a general rule, the same members are denoted by the same reference sign, and the repetitive description of the same members is omitted.

First, the outline of a mechanism of conventional letter-of-credit transactions in trade transactions is described below. A consignee 3 serving as an importer executes a sale and purchase contract with a shipper 2 serving as an exporter, and the consignee 3 causes a bank to prepare a letter of credit, and delivers the letter of credit to the shipper 2. The shipper 2 ships products serving as articles in accordance with the terms of the contract. A carrier 5 serving as a shipping company issues a bill of lading (B/L) to the shipper 2 in exchange for cargo. The shipper 2 attaches the letter of credit and shipping documents (the bill of lading, an invoice, a certificate of cargo marine insurance, or the like), and requests that a bank buy a documentary bill of exchange (a self-order bill of exchange). Here, the shipper 2 collects a cost of the products. The bank that has complied with a request to buy the documentary bill of exchange sends the documentary bill of exchange and the shipping documents to a bank of the consignee that has issued the letter of credit. The bank of the consignee 3 receives the documentary bill of exchange, the shipping document, or the like, and pays the cost to the bank of the shipper 2. Then, the bank of the consignee 3 requests that the consignee 3 accept the documentary bill of exchange. The consignee 3 accepts the documentary bill of exchange, and also receives the bill of lading. The consignee 3 receives the products from the carrier 5 in exchange for the bill of lading.

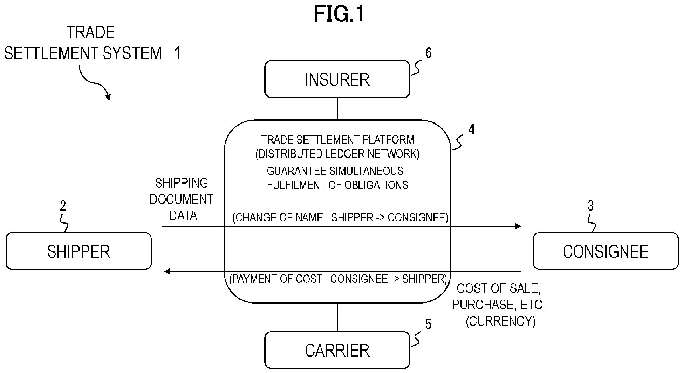

Fig. 1 is a configuration diagram illustrating an example of a mechanism of trade settlement according to the embodiment. This is a mechanism of using the trade settlement system 1 according to the present embodiment to guarantee the simultaneous fulfillment of obligations of a bilateral contract among a shipper 2, a consignee 3, a carrier 5, and an insurer 6 by using a trade settlement platform 4. Principally, the name of an owner indicating a vesting destination of ownership on shipping document data is changed from the shipper 2 to the consignee 3 from among contracting parties, and a cost of products moves between accounts from the consignee 3 to the shipper 2. In addition, a procedure of paying freight to be paid to the carrier 5 and a cargo marine premium to be paid to the insurer 6 is performed similarly by using the trade settlement platform 4.

In conventional letter-of-credit transactions, a movement of a fund relating to articles and a movement of a vesting destination of shipping documents that have been described above are not always performed simultaneously, and it can be said that the conventional letter-of-credit transactions have been performed while a risk of default is covered for using the credit of a bank as support.

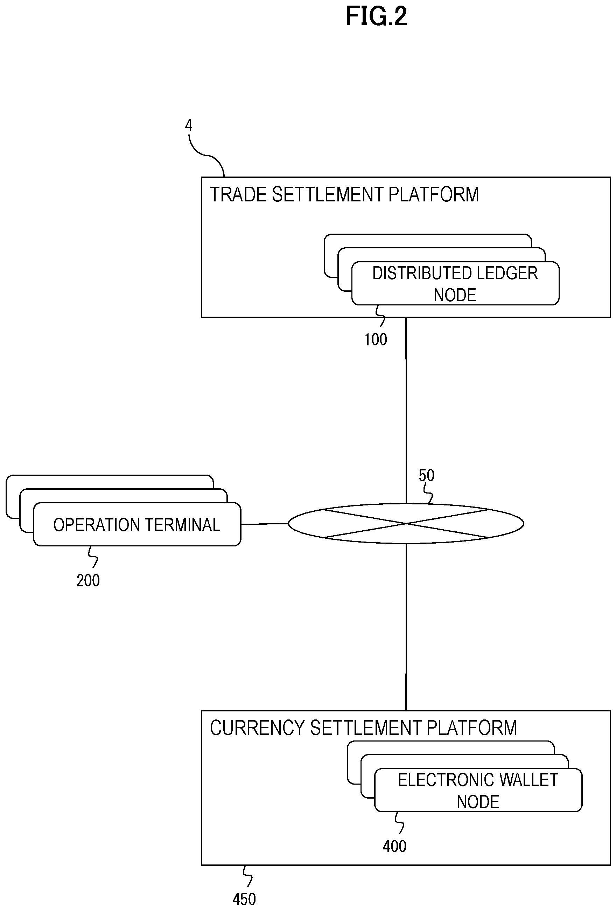

By employing a mechanism of trade settlement according to the present embodiment, the simultaneous fulfillment of obligations can be guaranteed in trade transactions. A specific means for achieving this mechanism is described using specific examples with reference to Fig. 2 and the drawings that follow.

Fig. 2 is a configuration diagram illustrating an example of a trade settlement system according to the embodiment. The trade settlement platform 4 is implemented by a distributed ledger network (what is called a blockchain). Therefore, the trade settlement platform 4 is a distributed processing environment obtained by combining one or more computers called distributed ledger nodes 100. The trade settlement platform 4 is communicably connected to an operation terminal 200 via a network 50 such as a local area network (LAN), a wide area network (WAN), the Internet, a portable telephone network, or a composite communication network of the LAN, the WAN, the Internet, the portable telephone network, and the like.

Note that the network 50 may be a virtual private network (VPN) or the like on a wireless communication network such as a portable telephone communication network.

The operation terminal 200 is a terminal to be used by each user of the shipper 2, the consignee 3, the carrier 5, and the insurer 6. The operation terminal 200 may be any device that can be connected to the trade settlement platform 4 via browser software or application software, such as a smartphone, a personal computer, or a tablet device of each of the users. In addition, the distributed ledger node 100 may be any device that can configure the trade settlement platform 4 via browser software or application software, such as a smartphone, a personal computer or a tablet device.

The blockchain is a technology for storing data in a distributed environment by handling a set of pieces of management data, such as transaction data, as data called a "block", and connecting a block to previous data, like a chain (by adding a hash value or the like for referring to a block, and associating blocks with each other in such a way that preceding or subsequent blocks can be traced). By using the blockchain, all of the execution histories of pieces of past data on the blockchain can be recorded and published, and there is an advantage in which a flexible system having a higher limit of throughput can be constructed according to an increase in a participating node.

In the trade settlement platform 4, processing of settlement or a change of name is implemented by a smart contract on the basis of the blockchain. When the smart contract has been executed as a program on the blockchain, non-falsification can be guaranteed, and processing can be performed speedily and reliably.

Stated another way, each user of the shipper 2, the consignee 3, the carrier 5, and the insurer 6 performs a procedure of preparation of shipping documents, a change of name (a change in a vesting destination that accompanies the transfer of ownership), or a movement of a fund on the trade settlement platform 4, by using an operation terminal 200 of each of the users. This enables the simultaneous fulfillment of obligations relating to a bilateral contract in a trade transaction.

At this time, by enabling a virtual currency account of an electronic wallet to be used to move a fund, processing can be simply performed. In order to achieve a movement of a fund using an electronic wallet, as described above, in the trade settlement system 1, the trade settlement platform 4 cooperates with a currency settlement platform 450. Note that the currency settlement platform 450 may process settlement in electronic money (electronized money having an exchange value that is roughly similar to an exchange value of money) in addition to virtual currency. Examples of electronic money include electronic currency obtained by electronizing real physical currency for which credit is guaranteed by each government, such as dollars or euros, electronic money or the like that is provided by a private enterprise or the like, electronized securities, real property, or the like, and others having a monetary exchange value that is similar to a monetary exchange value of the above. In addition, virtual currency is electronic money. However, in the present embodiment, virtual currency is considered to be part of electronic money in consideration with characteristics of virtual currency. However, virtual currency is not limited to this, and it can be said that virtual currency can be electronically handled, and has a monetary exchange value. Virtual currency has similarity to electronized securities, real property, or the like in consideration with a speculative aspect, and it can be considered that virtual currency is similar to electronic money in the point of convenience of settlement.

The currency settlement platform 450 is implemented, for example, by a distributed ledger network (what is called a blockchain). Therefore, the currency settlement platform 450 is a distributed processing environment obtained by combining one or more computers called electronic wallet nodes 400. The currency settlement platform 450 is communicably connected to the trade settlement platform 4 via the network 50.

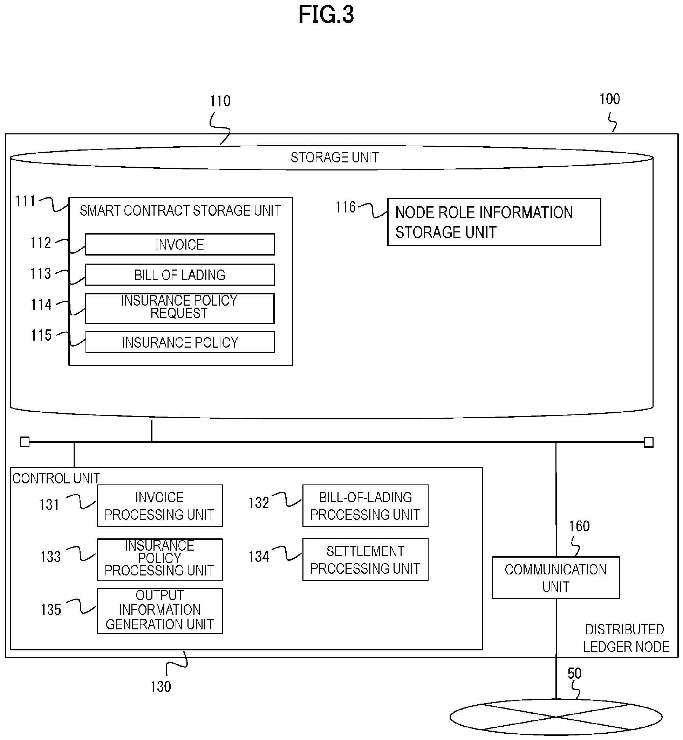

Fig. 3 is a diagram illustrating an example of a configuration of a distributed ledger node. A distributed ledger node 100 includes a storage unit 110, a control unit 130, and a communication unit 160. The storage unit 110 includes a smart contract storage unit 111 and a node role information storage unit 116. The smart contract storage unit 111 includes, as blockchain data, an invoice 112, a bill of lading 113, an insurance policy request 114, and an insurance policy 115.

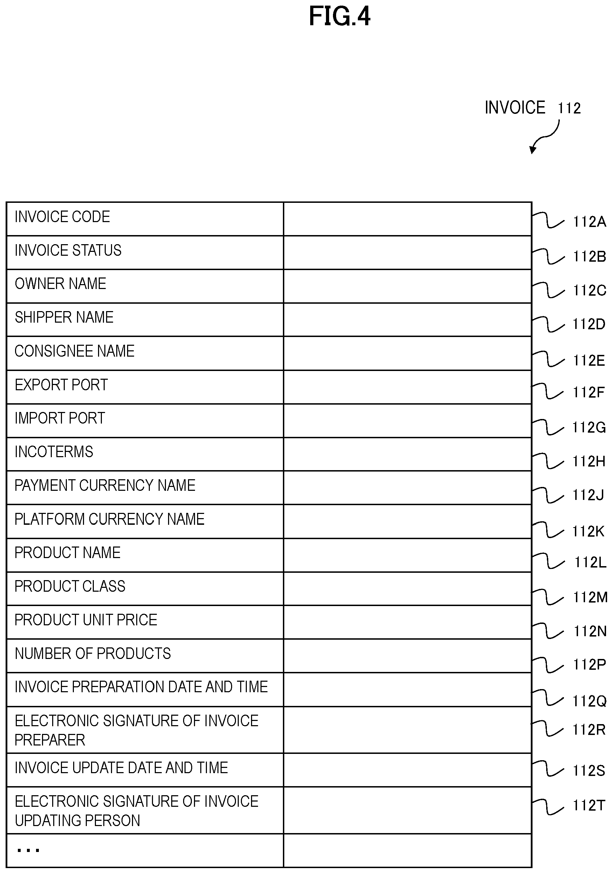

Fig. 4 is a diagram illustrating an example of a data structure of an invoice. For example, the invoice 112 includes an invoice code 112A, an invoice status 112B, owner name 112C, shipper name 112D, consignee name 112E, an export port 112F, an import port 112G, Incoterms 112H, payment currency name 112J, platform currency name 112K, product name 112L, product class 112M, product unit price 112N, the number of products 112P, invoice preparation date and time 112Q, an electronic signature of an invoice preparer 112R, invoice update date and time 112S, and an electronic signature of an invoice updating person 112T.

In the invoice, the invoice status 112B is a hashed character string that means "approved", "not-yet-approved", or the like, and is control information for avoiding a double transaction by rewriting a character string into another character string every time a change is made to data of the invoice to avoid updating from a state indicated by a previous status. In addition, the owner name 112C is information that specifies the name of an owner of the invoice, and is an item that will be rewritten from the shipper 2 to the consignee 3 at the time of simultaneous fulfillment of obligations. Further, the Incoterms 112H is information that specifies trade terms. The other items are data items that generally configure the invoice.

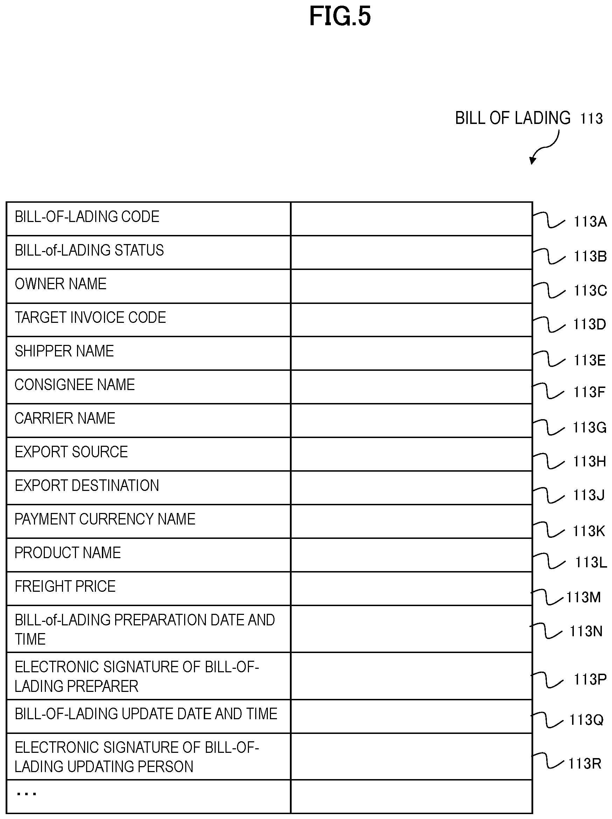

Fig. 5 is a diagram illustrating an example of a data structure of a bill of lading. For example, the bill of lading 113 includes a bill-of-lading code 113A, a bill-of-lading status 113B, owner name 113C, a target invoice code 113D, shipper name 113E, consignee name 113F, carrier name 113G, an export source 113H, an export destination 113J, payment currency name 113K, product name 113L, freight price 113M, bill-of-lading preparation date and time 113N, an electronic signature of a bill-of-lading preparer 113P, bill-of-lading update date and time 113Q, and an electronic signature of a bill-of-lading updating person 113R.

In the bill of lading (B/L), the bill-of-lading status 113B is a hashed character string that means "approved", "not-yet-approved", or the like, and is control information for avoiding a double transaction by rewriting a character string into another character string every time a change is made to data of the bill of lading to avoid updating from a state indicated by a previous status. The owner name 113C is information that specifies the name of an owner of the bill of lading, and is an item that will be rewritten from the shipper 2 to the consignee 3 at the time of simultaneous fulfillment of obligations. In general, it is assumed that the bill of lading (B/L) has a real right effect in a trade transaction, and it can be said that an owner described in the owner name 113C is an owner of cargo. In addition, the carrier name 113G is information that specifies the carrier 5. The freight price 113M is freight serving as a consideration paid to the carrier 5 for carrying cargo. The other items are data items that generally configure the bill of lading.

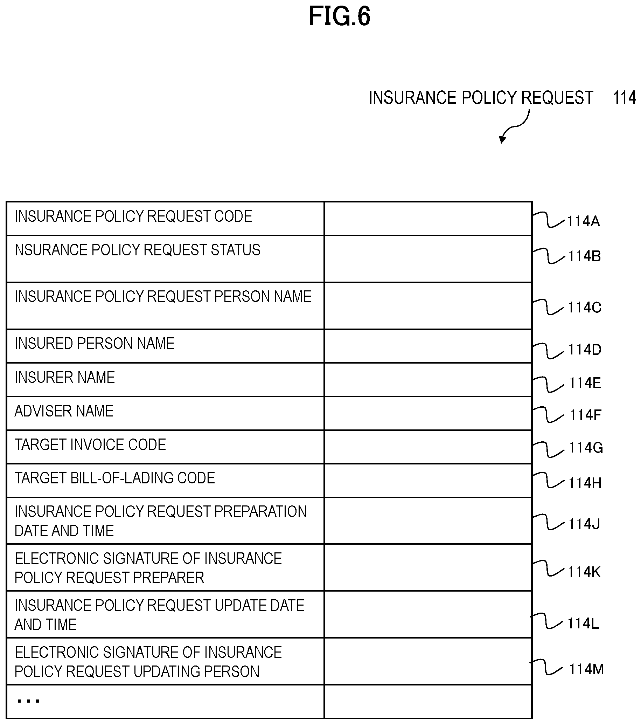

Fig. 6 is a diagram illustrating an example of a data structure of an insurance policy request. The insurance policy request is data to be used to apply for insurance. For example, the insurance policy request 114 includes an insurance policy request code 114A, an insurance policy request status 114B, insurance policy request person name 114C, insured person name 114D, insurer name 114E, adviser name 114F, a target invoice code 114G, a target bill-of-lading code 114H, insurance policy request preparation date and time 114J, an electronic signature of an insurance policy request preparer 114K, insurance policy request update date and time 114L, and an electronic signature of an insurance policy request updating person 114M.

In the insurance policy request, the insurance policy request status 114B is a hashed character string, and is control information for avoiding a double transaction by rewriting a character string into another character string every time a change is made to data of the insurance policy request to avoid updating from a state indicated by a previous status. The insurance policy request person name 114C is information that specifies the name of an applicant on an insurance policy. The insured person name 114D is generally information that specifies a beneficiary of insurance money.

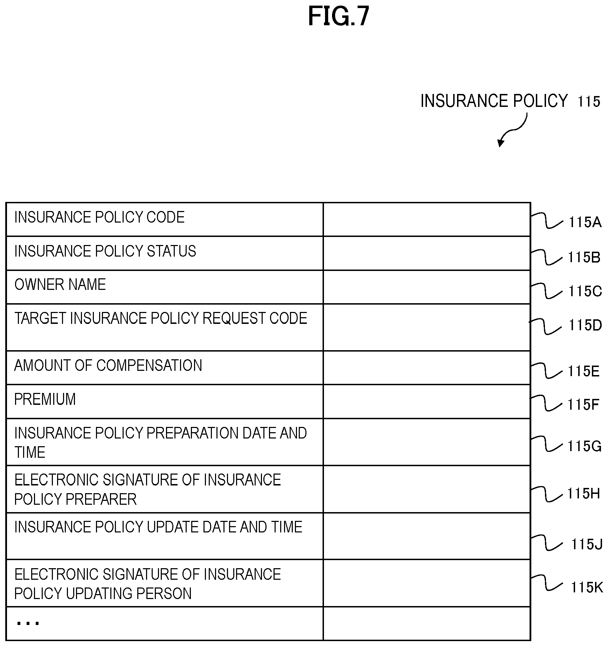

Fig. 7 is a diagram illustrating an example of a data structure of an insurance policy. The insurance policy is a certificate that is issued when applied insurance has been accepted, and has been established. For example, the insurance policy 115 includes an insurance policy code 115A, an insurance policy status 115B, an owner name 115C, a target insurance policy request code 115D, an amount of compensation 115E, a premium 115F, insurance policy preparation date and time 115G, an electronic signature of an insurance policy preparer 115H, insurance policy update date and time 115J, and an electronic signature of an insurance policy updating person 115K.

In the insurance policy, the insurance policy status 115B is a hashed character string that means "approved", "not-yet-approved", or the like, and is control information for avoiding a double transaction by rewriting a character string into another character string every time a change is made to data of the insurance policy to avoid updating from a state indicated by a previous status. The owner name 115C is information that specifies the beneficiary of insurance money, and is an item that will be rewritten from the shipper 2 to the consignee 3 at the time of simultaneous fulfillment of obligations.

Return to the description of Fig. 1. The node role information storage unit 116 stores information that distinguishes a role that is played by the distributed ledger node 100. The distributed ledger node 100 plays a role of part of the trade settlement platform 4 in a fluid or fixed manner. Therefore, there is a possibility that the distributed ledger node 100 will temporarily serve as any of a node of the shipper 2, a node of the consignee 3, a node of the carrier 5, and a node of the insurer 6.

The control unit 130 includes an invoice processing unit 131, a bill-of-lading processing unit 132, an insurance policy processing unit 133, a settlement processing unit 134, and an output information generation unit 135. The invoice processing unit 131, the bill-of-lading processing unit 132, and the insurance policy processing unit 133 are implemented by a processor loading smart contract codes provided on respective blockchains of an invoice, a bill of lading, and an insurance policy.

The invoice processing unit 131 is a smart contract relating to a blockchain of an invoice. Specifically, the invoice processing unit 131 prepares an invoice, approves the invoice, makes a change such as a change of name, or deletes the invoice.

The bill-of-lading processing unit 132 is a smart contract relating to a blockchain of a bill of lading. Specifically, the bill-of-lading processing unit 132 prepares a bill of lading, approves the bill of lading, makes a change such as a change of name, or deletes the bill of lading.

The insurance policy processing unit 133 is a smart contract relating to a blockchain of an insurance policy. Specifically, the insurance policy processing unit 133 prepares an insurance policy, approves the insurance policy, makes a change such as a change of name, or deletes the insurance policy.

The settlement processing unit 134 provides an application programming interface (API) for performing settlement processing, in response to the smart contract code. In addition, when this API has been called, the settlement processing unit 134 transfers processing that corresponds to called settlement processing to the currency settlement platform 450. For example, the settlement processing unit 134 issues, to the currency settlement platform 450, an instruction to move a fund of a specified amount between specified electronic wallet nodes. This fund may be in currency that the currency settlement platform 450 can handle, and may be, for example, in any of virtual currencies or in a real currency.

The output information generation unit 135 generates information to be displayed on a screen for an instruction and a result of processing performed by each of the invoice processing unit 131, the bill-of-lading processing unit 132, and the insurance policy processing unit 133. Specifically, the output information generation unit 135 generates displayed information that indicates a button instructing that an invoice be generated, a region that receives an input of a data item of the invoice, or a region that displays the generated invoice. The output information generation unit 135 generates information to be displayed on a screen for each of a bill of lading and an insurance policy, similarly to the invoice.

The communication unit 160 performs communication with another device via the network 50. As the communication, packet communication according to the TCP/IP protocol is employed, but the communication is not limited to this.

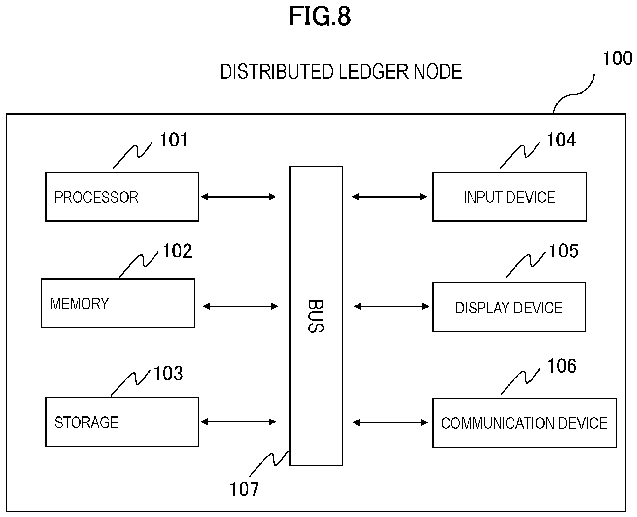

Fig. 8 is a diagram illustrating an example of a hardware configuration of a distributed ledger node. The distributed ledger node 100 has a hardware configuration implemented by a housing of what is called a server device, a work station, a personal computer, a smartphone, or a tablet terminal. The distributed ledger node 100 includes an processor 101, a memory 102, a storage 103, an input device 104, a display device 105, a communication device 106, and a bus 107 that connects respective devices.

The processor 101 is an arithmetic device such as a central processing unit (CPU).

The memory 102 is a memory device such as a random access memory (RAM).

The storage 103 is a non-volatile storage device that can store digital information, such as what is called a hard disk drive, a solid state drive (SSD), or a flash memory.

The input device 104 is a device that receives an input of any or some of a keyboard, a mouse, a touch panel, and a microphone. The display device 105 is a device that conducts a display on any or some of various output devices such as an organic electro-luminescence (EL) display.

The communication device 106 is a network interface card (NIC) that performs communication with another device via a network, a board or the like that performs communication with another device via an HDMI cable, an antenna device that performs wireless communication with another device via a wireless network, or a communication module or the like that performs communication with another device in one-to-one wireless communication.

The invoice processing unit 131, the bill-of-lading processing unit 132, the insurance policy processing unit 133, the settlement processing unit 134, and the output information generation unit 135 of the distributed ledger node 100 described above are implemented by a program (a smart contract) that causes the processor 101 to perform processing. This program is distributed from another device via a network according to a mechanism of a blockchain, is stored in the memory 102 or the storage 103, is loaded into the memory 102 for execution, and is executed by the processor 101.

In addition, the storage unit 110 of the distributed ledger node 100 is implemented by the memory 102 and the storage 103. The communication unit 160 is implemented by the communication device 106. An example of a hardware configuration of the distributed ledger node 100 has been described above.

A configuration of the distributed ledger node 100 can be classified into a larger number of components according to the content of processing. In addition, one component can be classified in such a way that a larger number of pieces of processing are performed.

Further, each control unit (the invoice processing unit 131, the bill-of-lading processing unit 132, the insurance policy processing unit 133, the settlement processing unit 134, or the output information generation unit 135) may be constructed by dedicated hardware (ASIC, GPU, or the like) that achieves each function. Furthermore, processing of each of the control units may be performed by one piece of hardware, or may be performed by plural pieces of hardware. Moreover, the distributed ledger node 100 does not need to constantly include all of the respective units, and may temporarily include all of the control units or only some of the control units. It is sufficient if the distributed ledger node 100 configures part of a blockchain and a smart contract.

Note that the operation terminal 200 and the electronic wallet node 400 basically have a hardware configuration that is similar to a hardware configuration of the distributed ledger node.

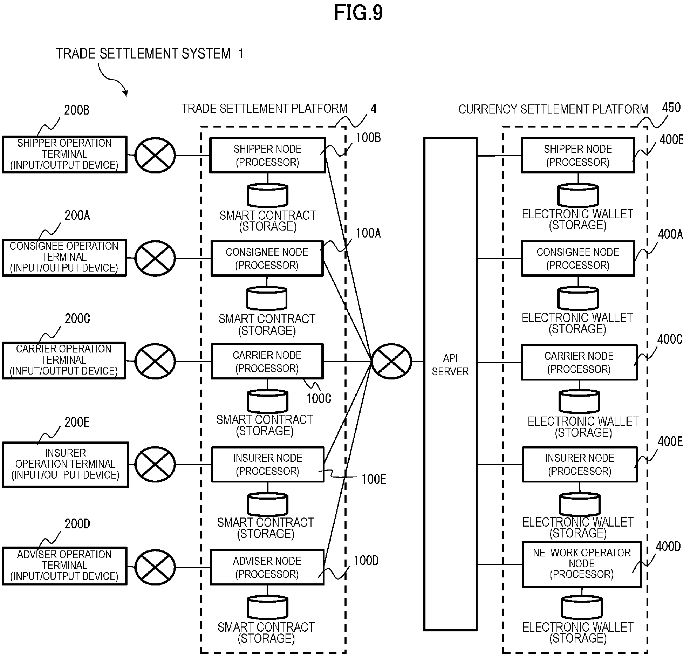

Fig. 9 is a diagram illustrating an example of a detailed configuration of a trade settlement system. The trade settlement platform 4 and the currency settlement platform 450 are communicably connected by using a network and an API server as an interface. Stated another way, the trade settlement platform 4 is connected to the currency settlement platform 450, by using a call of the API. The API server provides an API, and controls a required movement of a fund between electronic wallet nodes 400 according to a type and a parameter of a called interface.

The electronic wallet node 400 includes a shipper node 400B that performs processing on an electronic wallet of a shipper, a consignee node 400A that performs processing on an electronic wallet of a consignee, a carrier node 400C that performs processing on an electronic wallet of a carrier, an insurer node 400E that performs processing on an electronic wallet of an insurer, and a network operator node 400D that performs processing on an electronic wallet of a network operator. In addition, each electronic wallet node is configured by one or more computers, and the allocation of a wallet to a computer that configures each of the electronic wallet nodes may be dynamically changed.

The distributed ledger node 100 includes a shipper node 100B that performs processing on a blockchain and a smart contract of a shipper, a consignee node 100A that performs processing on a blockchain and a smart contract of a consignee, a carrier node 100C that performs processing on a blockchain and a smart contract of a carrier, an insurer node 100E that performs processing on a blockchain and a smart contract of an insurer, and an adviser node 100D that performs processing on a blockchain and a smart contract of an adviser. In addition, each distributed ledger node is configured by one or more computers, and the role of a computer that configures each of the distributed ledger nodes may be dynamically changed. Every time, an assigned role is written to the node role information storage unit 116 of the distributed ledger node 100, and the distributed ledger node acts as a node having the role.

The operation terminal 200 includes a shipper operation terminal 200B that performs processing on an input/output of a shipper, a consignee operation terminal 200A that performs processing on an input/output of a consignee, a carrier operation terminal 200C that performs processing on an input/output of a carrier, an insurer operation terminal 200E that performs processing on an input/output of an insurer, and an adviser operation terminal 200D that performs processing on an input/output of an adviser.

Next, an operation of the trade settlement system 1 according to the present embodiment is described.

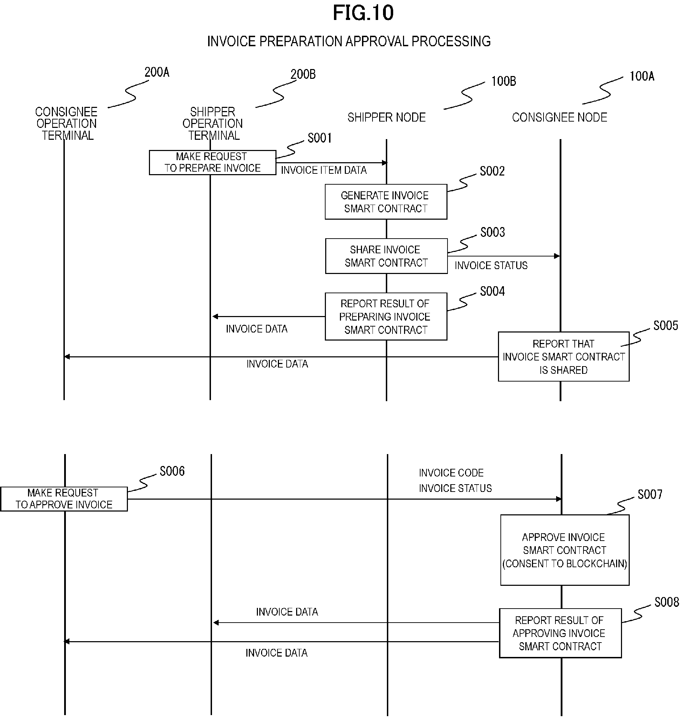

Fig. 10 is a diagram illustrating an example of a flow of invoice preparation approval processing. When a trade transaction has started, a shipper starts invoice preparation approval processing.

First, an invoice preparation request and item data of an invoice are transmitted from the shipper operation terminal 200B to the shipper node 100B (step S001). Specifically, the shipper operation terminal 200B receives an input of data of each item of an invoice from the shipper 2, and transmits the data to the shipper node 100B.

The shipper node 100B prepares an invoice smart contract (step S002). Specifically, in the shipper node 100B, the invoice processing unit 131 generates a blockchain of the invoice.

Then, the invoice processing unit 131 of the shipper node 100B reports an invoice status to the consignee node 100A in such a way that the invoice smart contract can be shared (step S003).

The shipper node 100B reports, to the shipper operation terminal 200B, a result of preparing the invoice smart contract together with invoice data (step S004).

The consignee node 100A reports to the consignee operation terminal 200A that the invoice smart contract is shared, together with the invoice data (step S005).

A phase of preparation of an invoice has been described above. By preparing an invoice, a blockchain, that is, a smart contract, of the invoice is generated, and the shipper operation terminal 200B and the consignee operation terminal 200A obtain invoice data.

Thereafter, the consignee operates the consignee operation terminal 200A, and transmits, to the consignee node 100A, a request to approve the invoice together with an invoice code and an invoice status (step S006).

The invoice processing unit 131 of the consignee node 100A approves the invoice smart contract (step S007). This approval processing is performed according to a general blockchain consensus algorithm.

The consignee node 100A transmits the invoice data to the shipper operation terminal 200B and the consignee operation terminal 200A, and reports a result of approving the invoice smart contract (step S008).

A phase of approval of an invoice has been described above. By approving an invoice, a blockchain, that is, a smart contract, of the invoice is approved, and approved invoice data is transmitted to the shipper operation terminal 200B and the consignee operation terminal 200A.

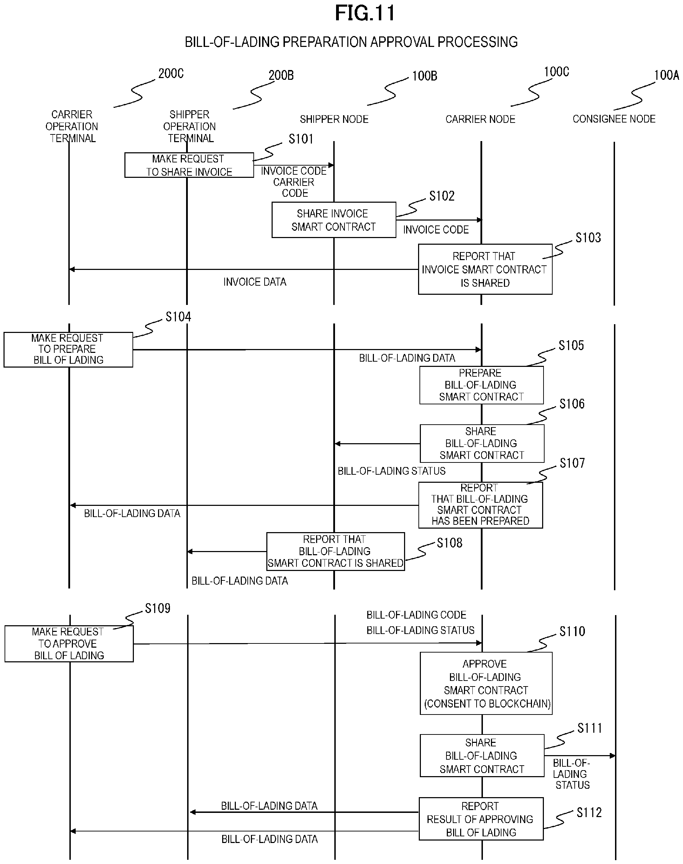

Fig. 11 is a diagram illustrating an example of a flow of bill-of-lading preparation approval processing. The bill-of-lading preparation approval processing of Fig. 11 indicates a case where Incoterms indicating transaction terms of trade is cost, insurance, and freight (CIF) or cost and freight (CFR), and a shipper that has received approval of an invoice starts the bill-of-lading preparation approval processing. In a case where Incoterms is free on board (FOB), it is sufficient if the shipper operation terminal 200B is replaced with the consignee operation terminal 200A and the shipper node 100B is replaced with the consignee node 100A.

First, as a request to share an invoice, an invoice code and a carrier code are transmitted from the shipper operation terminal 200B to the shipper node 100B (step S101). Specifically, the shipper operation terminal 200B receives an input of an invoice code and a carrier code of a selected carrier from the shipper 2, and transmits the invoice code and the carrier code to the shipper node 100B.

The shipper node 100B shares an invoice smart contract with the carrier (step S102). Specifically, in the shipper node 100B, the invoice processing unit 131 transmits the invoice code to the carrier node 100C.

Then, the carrier node 100C transmits invoice data to the carrier operation terminal 200C to report that the invoice smart contract is shared (step S103).

By performing these processes of steps S101 to S103, the carrier operation terminal 200C can obtain the invoice data.

Thereafter, the carrier 5 transmits a request to prepare a bill of lading and item data of the bill of lading from the carrier operation terminal 200C to the carrier node 100C (step S104). Specifically, the carrier operation terminal 200C receives an input of data of each item of the bill of lading from the carrier 5, and transmits the data to the carrier node 100C.

The carrier node 100C prepares a bill-of-lading smart contract (step S105). Specifically, in the carrier node 100C, the bill-of-lading processing unit 132 generates a blockchain of the bill of lading.

Then, the bill-of-lading processing unit 132 of the carrier node 100C reports a bill-of-lading status to the shipper node 100B in such a way that the bill-of-lading smart contract can be shared (step S106).

The carrier node 100C reports, to the carrier operation terminal 200C, a result of preparing the bill-of-lading smart contract together with bill-of-lading data (step S107) .

The shipper node 100B reports to the shipper operation terminal 200B that the bill-of-lading smart contract is shared, together with the bill-of-lading data (step S108).

A phase of preparation of a bill of lading has been described above. By preparing a bill of lading, a blockchain, that is, a smart contract, of the bill of lading is generated, and the shipper operation terminal 200B and the carrier operation terminal 200C obtain bill-of-lading data.

Thereafter, the carrier 5 operates the carrier operation terminal 200C, and transmits, to the carrier node 100C, a request to approve the bill of lading together with a bill-of-lading code and a bill-of-lading status (step S109).

The bill-of-lading processing unit 132 of the carrier node 100C approves the bill-of-lading smart contract (step S110). This approval processing is performed according to a general blockchain consensus algorithm.

Then, the bill-of-lading processing unit 132 of the carrier node 100C reports a bill-of-lading status to the consignee node 100A in such a way that the bill-of-lading smart contract can be shared (step S111).

The bill-of-lading processing unit 132 of the carrier node 100C transmits the bill-of-lading data to the shipper operation terminal 200B and the carrier operation terminal 200C, and reports a result of approving the bill-of-lading smart contract (step S112).

A phase of approval of a bill of lading has been described above. By approving a bill of lading, a blockchain, that is, a smart contract, of the bill of lading is approved, and approved bill-of-lading data is transmitted to the shipper operation terminal 200B and the carrier operation terminal 200C.

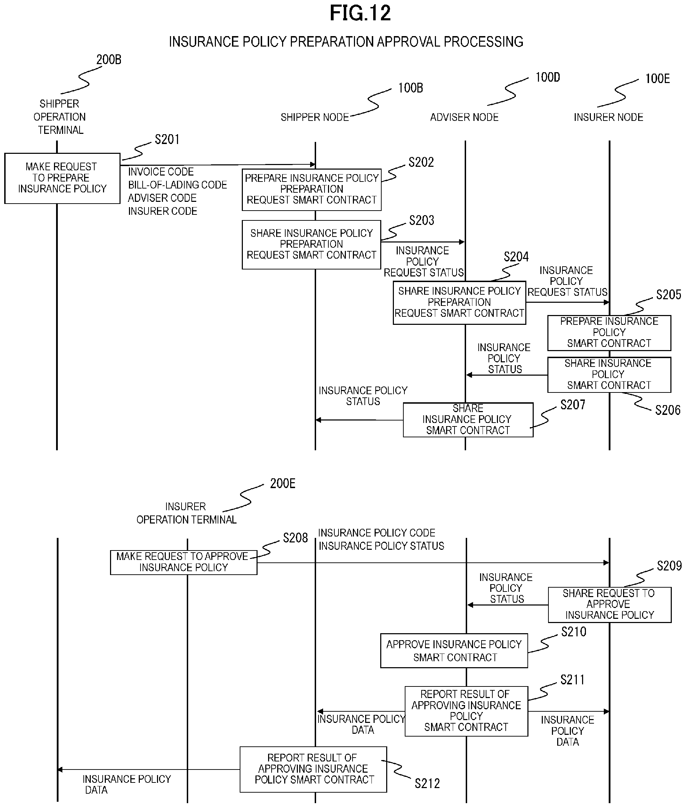

Fig. 12 is a diagram illustrating an example of a flow of insurance policy preparation approval processing. The insurance policy preparation approval processing of Fig. 12 indicates a case where Incoterms indicating transaction terms of trade is CIF, and the insurance policy preparation approval processing is started by a shipper that has received approval of an invoice and approval of a bill of lading. In a case where Incoterms is CFR or FOB, it is sufficient if the shipper operation terminal 200B is replaced with the consignee operation terminal 200A and the shipper node 100B is replaced with the consignee node 100A.

First, as a request to prepare an insurance policy, an invoice code, a bill-of-lading code, an adviser code, and an insurer code are transmitted from the shipper operation terminal 200B to the shipper node 100B (step S201). Specifically, the shipper operation terminal 200B receives, from the shipper 2, an input of an invoice code, a bill-of-lading code, an adviser code of a selected adviser, and an insurer code of a selected insurer, and transmits, to the shipper node 100B, the invoice code, the bill-of-lading code, the adviser code, and the insurer code. Note that an adviser plays a role of mediating an application for insurance.

The shipper node 100B prepares an insurance policy preparation request smart contract (step S202). Specifically, in the shipper node 100B, the insurance policy processing unit 133 generates a blockchain of a request to prepare an insurance policy.

The insurance policy processing unit 133 of the shipper node 100B reports an insurance policy request status to an adviser node 100D that has been specified by the adviser code in such a way that the insurance policy request smart contract can be shared (step S203).

The insurance policy processing unit 133 of the adviser node 100D reports an insurance policy request status to an insurer node 100E of an insurer 6 that has been specified by the insurer code in such a way that the insurance policy request smart contract can be shared (step S204).

The insurance policy processing unit 133 of the insurer node 100E prepares an insurance policy smart contract (step S205). Specifically, in the insurer node 100E, the insurance policy processing unit 133 generates a blockchain of an insurance policy.

The insurance policy processing unit 133 of the insurer node 100E reports an insurance policy status to the adviser node 100D in such a way that the insurance policy smart contract can be shared (step S206).

The insurance policy processing unit 133 of the adviser node 100D reports an insurance policy status to the shipper node 100B in such a way that the insurance policy smart contract can be shared (step S207).

A phase of preparation of an insurance policy has been described above. By preparing an insurance policy, a blockchain, that is, a smart contract, of the insurance policy is generated, and the shipper node 100B and the adviser node 100D can obtain insurance policy data.

Thereafter, the insurer 6 operates the insurer operation terminal 200E, and transmits, to the insurer node 100E, a request to approve an insurance policy together with the insurance policy code and an insurance policy status (step S208).

The insurance policy processing unit 133 of the insurer node 100E reports an insurance policy status to an adviser node 100D that has been specified by the adviser code in such a way that the request to approve the insurance policy can be shared (step S209).

The insurance policy processing unit 133 of the adviser node 100D approves the insurance policy smart contract (step S210). This approval processing is performed according to a general blockchain consensus algorithm.

The insurance policy processing unit 133 of the adviser node 100D transmits insurance policy data to the shipper node 100B and the insurer node 100E, and reports a result of approving the insurance policy smart contract (step S211).

The insurance policy processing unit 133 of the shipper node 100B transmits the insurance policy data to the shipper operation terminal 200B, and reports a result of approving the insurance policy smart contract (step S212).

A phase of approval of an insurance policy has been described above. By approving an insurance policy, a blockchain, that is, a smart contract, of the insurance policy is approved, and approved insurance policy data is transmitted to the shipper operation terminal 200B, the adviser node 100D, and the insurer node 100E.

By performing the invoice preparation approval processing, the bill-of-lading preparation approval processing, and the insurance policy preparation approval processing that have been described above, it can be said that an invoice, a bill of lading, and an insurance policy have been stored on a blockchain. By using this blockchain and a smart contract, settlement processing and change-of-name processing that guarantee the simultaneous fulfillment of obligations can be performed. Flows of settlement processing using virtual currency and change-of-name processing in the case of each trade term are described below.

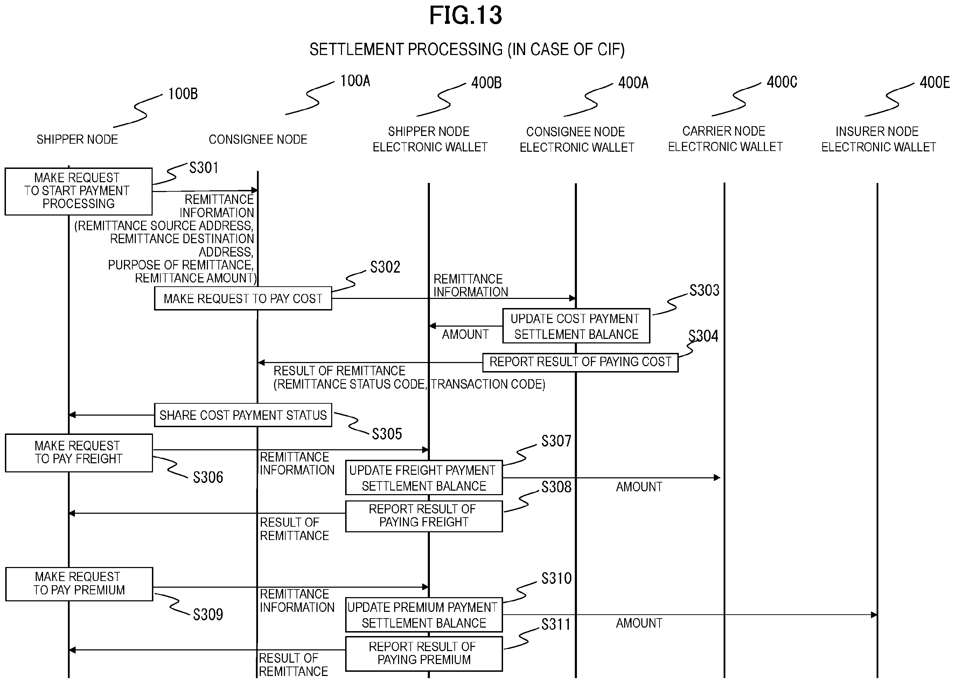

Fig. 13 is a diagram illustrating an example of a flow of settlement processing in the case of CIF. Settlement processing is started in a state where at least an invoice and a bill of lading have been prepared and approved. The necessity of preparation and approval of an insurance policy depends on a transaction, and therefore the preparation and approval of the insurance policy is not essential. However, the present flow example indicates an example of a transaction in which an insurance contract is made. Under terms indicated by the Incoterms "CIF" of trade terms, a consignee pays the sum of a cost of products, freight, and a premium to a shipper, and the shipper respectively pays the freight and a cargo marine premium to the carrier 5 and the insurer 6.

First, the shipper node 100B requests that the consignee node 100A start payment processing (step S301). Specifically, the settlement processing unit 134 of the shipper node 100B transmits, to the consignee node 100A, remittance information including at least a remittance source address (information specifying a wallet), a remittance destination address, the purpose of remittance, and a remittance amount. It is assumed that the settlement processing unit 134 refers to a shipper, a consignee, product name, product unit price, and the number of products on an invoice, freight price on a bill of lading, and a premium on an insurance policy, and specifies the remittance information. However, this is not restrictive. Information that the shipper 2 has input in the shipper operation terminal 200B may be used, or registered information on a system for predetermined transactions or on a system for virtual currency transactions may be referred to.

The settlement processing unit 134 of the consignee node 100A transmits the remittance information to an electronic wallet of the consignee node 400A, and transmits a request to pay a cost (step S302).

Then, the consignee node 400A remits an amount specified by the remittance amount from an electronic wallet of a consignee specified by the remittance source address to an electronic wallet of a shipper specified by the remittance destination address, and updates a cost payment settlement balance (step S303). The consignee node 400A reports a result of paying the cost to the consignee node 100A (step S304). Specifically, the consignee node 400A transmits, to the consignee node 100A, a result of remittance including a remittance status code and a transaction code.

Then, the settlement processing unit 134 of the consignee node 100A transmits a cost payment status to the shipper node 100B, and shares the cost payment status (step S305).

Processing for paying a cost of products (including freight and a premium) in settlement processing has been described above. By performing this processing, the obligation illustrated in Fig. 1 of a cost (currency) of sale, purchase, or the like from the consignee 3 to the shipper 2 is fulfilled.

Then, the shipper node 100B requests that the shipper node 400B pay freight (step S306). Specifically, the settlement processing unit 134 of the shipper node 100B transmits, to the shipper node 400B, remittance information including at least a remittance source address, a remittance destination address, the purpose of remittance, and a remittance amount. It is assumed that the settlement processing unit 134 refers to a shipper, a consignee, and freight price on a bill of lading, and specifies the remittance information. However, this is not restrictive. Information that the shipper 2 has input in the shipper operation terminal 200B may be used, or registered information on a system for predetermined transactions or on a system for virtual currency transactions may be referred to.

The shipper node 400B remits an amount specified by the remittance amount from an electronic wallet of a shipper specified by the remittance source address to an electronic wallet of a carrier specified by the remittance destination address, and updates a freight payment settlement balance (step S307). Then, the shipper node 400B reports a result of paying freight to the shipper node 100B (step S308). Specifically, the shipper node 400B transmits, to the shipper node 100B, a result of remittance including a remittance status code and a transaction code.

Processing for paying freight in settlement processing has been described above. By performing this processing, an obligation of freight from the shipper 2 to the carrier 5 is fulfilled.

Then, the shipper node 100B requests that the shipper node 400B pay a premium (step S309). Specifically, the settlement processing unit 134 of the shipper node 100B transmits, to the shipper node 400B, remittance information including at least a remittance source address, a remittance destination address, the purpose of remittance, and a remittance amount. It is assumed that the settlement processing unit 134 refers to a shipper and consignee on an invoice, and a premium on an insurance policy, and specifies the remittance information. However, this is not restrictive. Information that the shipper 2 has input in the shipper operation terminal 200B may be used, or registered information on a system for predetermined transactions or on a system for virtual currency transactions may be referred to.

The shipper node 400B remits an amount specified by the remittance amount from an electronic wallet of a shipper specified by the remittance source address to an electronic wallet of an insurer specified by the remittance destination address, and updates a premium payment settlement balance (step S310). Then, the shipper node 400B reports a result of paying a premium to the shipper node 100B (step S311). Specifically, the shipper node 400B transmits, to the shipper node 100B, a result of remittance including a remittance status code and a transaction code.

Processing for paying a cargo marine premium in settlement processing has been described above. By performing this processing, the obligation illustrated in Fig. 1 of a premium from the shipper 2 to the insurer 6 is fulfilled.

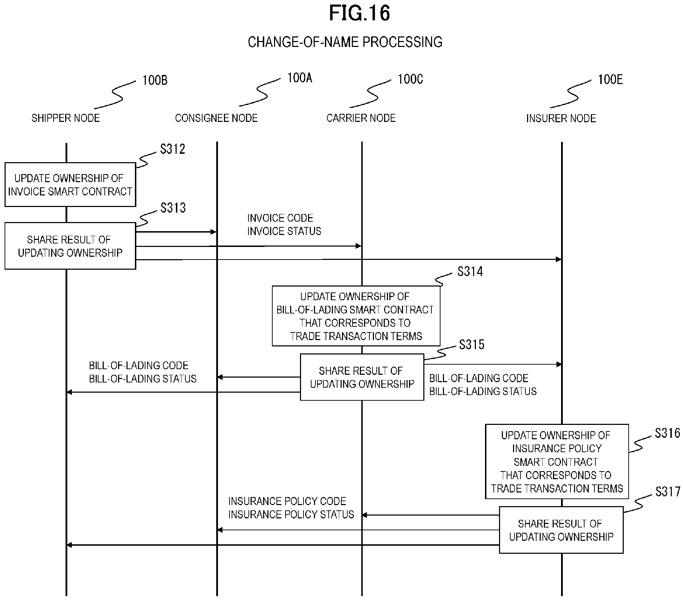

In a case where all of these settlements illustrated in Fig. 13 have been successful (completed), the change-of-name processing illustrated in Fig. 16 is started. These settlements are indivisible processing, and in a case where some of these settlements fail to be completed, the entirety of this settlement processing is discarded. Stated another way, the processing returns to a state before the start of settlement processing.

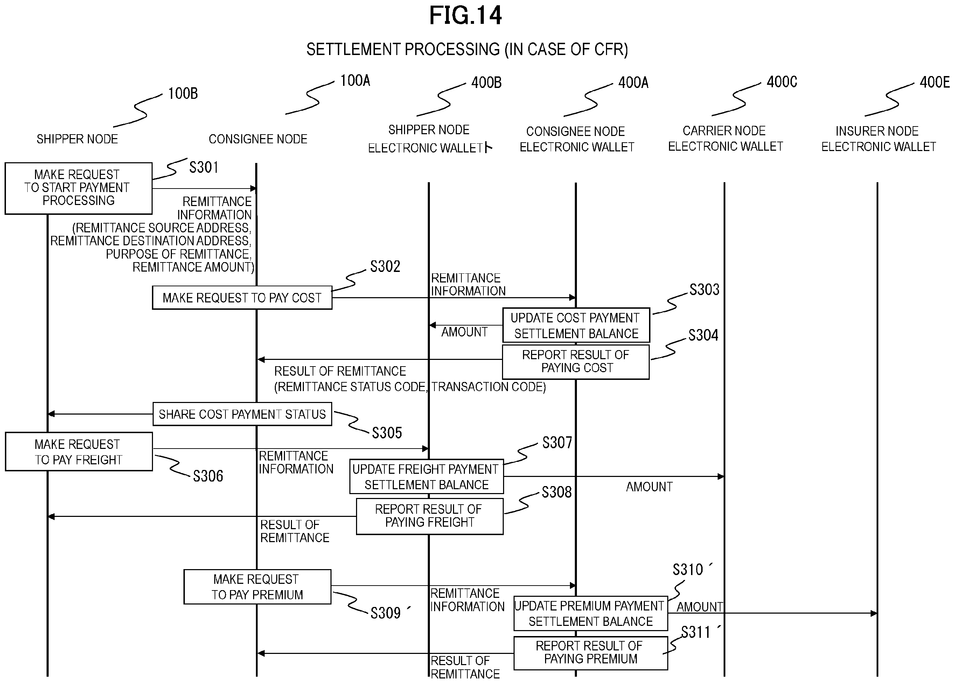

Fig. 14 is a diagram illustrating an example of a flow of settlement processing in the case of CFR. Settlement processing is started in a state where at least an invoice and a bill of lading have been prepared and approved. The necessity of preparation and approval of an insurance policy depends on a transaction, and therefore the preparation and approval of the insurance policy is not essential. However, the present flow example indicates an example of a transaction in which an insurance contract is made. Under terms indicated by the Incoterms "CFR" of trade terms, a consignee pays the sum of a cost of products and freight to a shipper, the shipper pays the freight to the carrier 5, and the consignee pays a premium to the insurer 6. Accordingly, the flow is basically similar to a flow of settlement processing in the case of CIF, but there is a difference in a flow of payment of a premium. Therefore, a section of processing for paying a premium (the processes of steps S309 to S311 in Fig. 13) in the case of CFR is described below.

The consignee node 100A requests that the consignee node 400A pay a premium (step S309'). Specifically, the settlement processing unit 134 of the consignee node 100A transmits, to the consignee node 400A, remittance information including at least a remittance source address, a remittance destination address, the purpose of remittance, and a remittance amount. It is assumed that the settlement processing unit 134 refers to a shipper and consignee on an invoice, and a premium on an insurance policy, and specifies the remittance information. However, this is not restrictive. Information that the consignee 3 has input in the consignee operation terminal 200A may be used, or registered information on a system for predetermined transactions or on a system for virtual currency transactions may be referred to.

The consignee node 400A remits an amount specified by the remittance amount from an electronic wallet of a consignee specified by the remittance source address to an electronic wallet of an insurer specified by the remittance destination address, and updates a premium payment settlement balance (step S310'). The consignee node 400A reports a result of paying a premium to the consignee node 100A (step S311'). Specifically, the consignee node 400A transmits, to the consignee node 100A, a result of remittance including a remittance status code and a transaction code.

Processing for paying a premium in settlement processing has been described above. By performing this processing, the obligation illustrated in Fig. 1 of a premium from the consignee 3 to the insurer 6 is fulfilled.

In a case where all of these settlements illustrated in Fig. 14 have been successful (completed), the change-of-name processing illustrated in Fig. 16 is started. These settlements are indivisible processing, and in a case where some of these settlements fail to be completed, the entirety of this settlement processing is discarded. Stated another way, the processing returns to a state before the start of settlement processing.

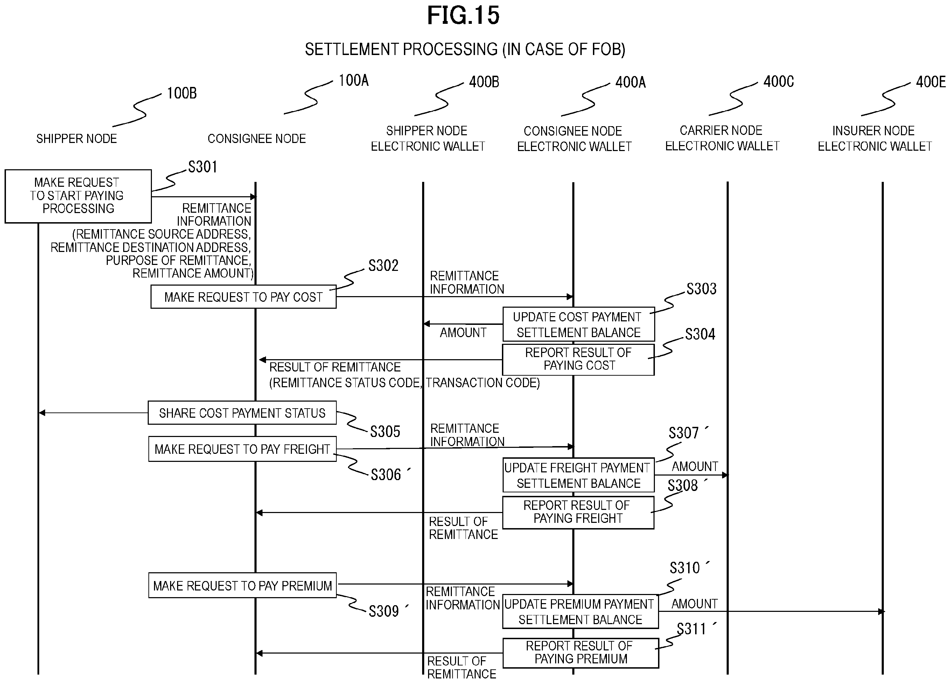

Fig. 15 is a diagram illustrating an example of a flow of settlement processing in the case of FOB. Settlement processing is started in a state where at least an invoice and a bill of lading have been prepared and approved. The necessity of preparation and approval of an insurance policy depends on a transaction, and therefore the preparation and approval of the insurance policy is not essential. However, the present flow example indicates an example of a transaction in which an insurance contract is made. Under terms indicated by the Incoterms "FOB" of trade terms, a consignee pays a cost of products to a shipper, and the consignee pays freight and a cargo marine premium to the carrier 5 and the insurer 6, respectively. Accordingly, the flow is basically similar to a flow of settlement processing in the case of CFR, but there is a difference in a flow of payment of freight. Therefore, a section of processing for paying freight (the processes of steps S306 to S308 in Fig. 14) in the case of FOB is described below.

The consignee node 100A requests that the consignee node 400A pay freight (step S306'). Specifically, the settlement processing unit 134 of the consignee node 100A transmits, to the consignee node 400A, remittance information including at least a remittance source address, a remittance destination address, the purpose of remittance, and a remittance amount. It is assumed that the settlement processing unit 134 refers to a shipper, a consignee, and freight price on a bill of lading, and specifies the remittance information. However, this is not restrictive. Information that the consignee 3 has input in the consignee operation terminal 200A may be used, or registered information on a system for predetermined transactions or on a system for virtual currency transactions may be referred to.

The consignee node 400A remits an amount specified by the remittance amount from an electronic wallet of a consignee specified by the remittance source address to an electronic wallet of a carrier specified by the remittance destination address, and updates a freight payment settlement balance (step S307'). The consignee node 400A reports a result of paying freight to the consignee node 100A (step S308'). Specifically, the consignee node 400A transmits, to the consignee node 100A, a result of remittance including a remittance status code and a transaction code.

Processing for paying freight in settlement processing has been described above. By performing this processing, an obligation of freight from the consignee 3 to the carrier 5 is fulfilled.

In a case where all of these settlements have been successful (completed), the change-of-name processing illustrated in Fig. 16 is started. These settlements illustrated in Fig. 15 are indivisible processing, and in a case where some of these settlements fail to be completed, the entirety of this settlement processing is discarded. Stated another way, the processing returns to a state before the start of settlement processing.

Fig. 16 is a diagram illustrating an example of a flow of change-of-name processing. Change-of-name processing is started in a case where settlement processing in the case of trade terms illustrated in any of Figs. 13 to 15 has been successful (completed).

First, the invoice processing unit 131 of the shipper node 100B updates ownership of an invoice smart contract to the consignee 3 (step S312). Specifically, the invoice processing unit 131 performs processing for rewriting the owner name 112C of an invoice from the shipper 2 to the consignee 3.

The invoice processing unit 131 of the shipper node 100B shares a result of updating ownership with the consignee node 100A, the carrier node 100C, and the insurer node 100E (step S313). Specifically, the invoice processing unit 131 of the shipper node 100B transmits an invoice code and an invoice status to each of the consignee node 100A, the carrier node 100C, and the insurer node 100E in such a way that a result of updating is shared.

A change of name of an invoice in change-of-name processing has been described above. By performing this processing, an obligation of a change of name on a shipping document (an invoice) from the shipper 2 to the consignee 3 is fulfilled.

The bill-of-lading processing unit 132 of the carrier node 100C updates the ownership of a bill-of-lading smart contract to the consignee 3 (step S314). Specifically, the bill-of-lading processing unit 132 performs processing for rewriting the owner name 113C of a bill of lading from the shipper 2 to the consignee 3.

The bill-of-lading processing unit 132 of the carrier node 100C shares a result of updating ownership with the shipper node 100B, the consignee node 100A, and the insurer node 100E (step S315). Specifically, the bill-of-lading processing unit 132 of the carrier node 100C transmits a bill-of-lading code and a bill-of-lading status to each of the shipper node 100B, the consignee node 100A, and the insurer node 100E in such a way that a result of updating is shared.

A change of name of a bill of lading in change-of-name processing has been described above. By performing this processing, an obligation of a change of name on a shipping document (a bill of lading) from the shipper 2 to the consignee 3 is fulfilled.

The insurance policy processing unit 133 of the insurer node 100E updates the ownership of an insurance policy smart contract to the consignee 3 (step S316). Specifically, the insurance policy processing unit 133 performs processing for rewriting the owner name 115C of an insurance policy from the shipper 2 to the consignee 3.

The insurance policy processing unit 133 of the insurer node 100E shares a result of updating ownership with the shipper node 100B, the consignee node 100A, and the carrier node 100C (step S317). Specifically, the insurance policy processing unit 133 of the insurer node 100E transmits an insurance policy code and an insurance policy status to each of the shipper node 100B, the consignee node 100A, and the carrier node 100C in such a way that a result of updating is shared.

A change of name of an insurance policy in change-of-name processing has been described above. By performing this processing, an obligation of a change of name on a shipping document (an insurance policy) from the shipper 2 to the consignee 3 is fulfilled.

A flow of change-of-name processing has been described above. The settlement processing illustrated in Figs. 13 to 15 and the change-of-name processing illustrated in Fig. 16 are indivisible processing, and when the entirety of the settlement processing and the change-of-name processing that have been described above has been successful (completed) normally, effects are exhibited. In a case where part of the processing fails to be completed, the entirety of the settlement processing and the change-of-name processing is discarded. Stated another way, the processing returns to a state before the start of the settlement processing and the change-of-name processing.

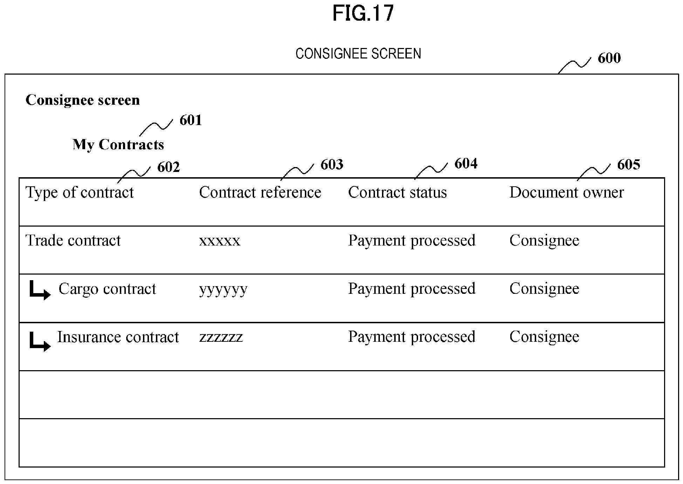

Fig. 17 is a diagram illustrating an example of a consignee screen. A consignee screen 600 indicates an example of a status display screen that is displayed in a state where the consignee 3 has logged in to the consignee node 100A. On the consignee screen 600, a contract list 601 is displayed in a list form, and in each contract of the list, "type of contract" 602, "contract reference" 603, "contract status" 604, and "document owner" 605 are displayed.

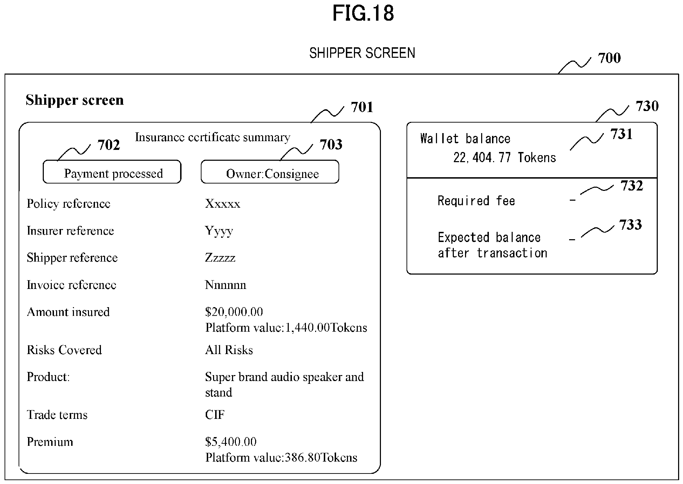

Fig. 18 is a diagram illustrating an example of a shipper screen. A shipper screen 700 indicates an example of a status display screen that is displayed in a state where the shipper 2 has logged in to the shipper node 100B. The shipper screen 700 includes a policy summary field 701 and an electronic wallet field 730 of a shipper. In the policy summary field 701, items of a policy and values of the items, a premium payment status 702, and an insurance owner 703 are displayed. In the electronic wallet field 730, a wallet balance 731, a billed amount of payment 732, and a balance after payment 733 are displayed. Basically, the insurer 6 can also view a similar screen.

Note that the examples described above of invoice preparation approval processing, bill-of-lading preparation approval processing, insurance policy preparation approval processing, settlement processing, and change-of-name processing are not restrictive. For example, other trade terms (EXW, free carrier (FCA), free alongside ship (FAS), carriage paid to (CPT), carriage and insurance paid to (CIP), delivered at frontier (DAF), delivered ex ship (DES), delivered ex quay (DEQ), delivered duty unpaid (DDU), delivered duty paid (DDP), and the like) may be handled.

As described in the embodiment described above, by employing the trade settlement system 1, the simultaneous fulfillment of obligations can be guaranteed in trade transactions.

The present invention is not limited to the embodiment described above Various modifications can be made to the embodiment described above without departing from technical ideas of the present invention. For example, in the embodiment described above, the distributed ledger node 100 and the electronic wallet node 400 are configured by computers different from each other, but this is not restrictive. For example, the distributed ledger node 100 and the electronic wallet node 400 may be configured by the same computer. In such a case, efficiency of arithmetic processing can be improved. Therefore, even in a large-scale platform, the flexible utilization of hardware resources can be easily achieved.

In addition, technical elements of the embodiment described above may be independently applied, or the technical elements may be divided into a plurality of portions such as program parts and hardware parts, and may be applied.

The present invention has been described above by principally describing the embodiment.

### Reference Signs List

- 1: Trade settlement system
- 2: Shipper
- 3: Consignee
- 4: Trade settlement platform
- 5: Carrier
- 6: Insurer
- 50: Network
- 100: Distributed ledger node
- 110: Storage unit
- 111: Smart contract storage unit
- 112: Invoice
- 113: Bill of lading
- 114: Insurance policy request
- 115: Insurance policy
- 116: Node role information storage unit
- 130: Control unit
- 131: Invoice processing unit
- 132: Bill-of-lading processing unit
- 133: Insurance policy processing unit
- 134: Settlement processing unit
- 135: Output information generation unit
- 160: Communication unit
- 200: Operation terminal
- 400: Electronic wallet node
- 450: Currency settlement platform

## Claims

1. A trade settlement system that uses one or more computers, wherein
each of the one or more computers includes,
for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase:
a settlement processing unit that performs the settlement by using a smart contract on a blockchain; and
a processing unit that processes the change of name by using the smart contract on the blockchain, in a case where the settlement has been successful.

2. The trade settlement system according to claim 1, wherein
processing of the change of name includes processing for changing a name of an owner of a predetermined shipping document including at least a bill of lading relating to the article.

3. The trade settlement system according to claim 2, wherein
the predetermined shipping document is configured as blockchain data.

4. The trade settlement system according to any one of claims 1 to 3, wherein
the settlement includes settlement that includes payment using electronic currency between a plurality of parties concerned according to trade terms.

5. The trade settlement system according to claim 4, wherein
the settlement includes settlement that includes processing for paying freight of the trade to a carrier according to the trade terms by using the electronic currency.

6. The trade settlement system according to claim 4, wherein
the settlement includes settlement that includes processing for paying a cargo marine premium relating to the trade to an insurer according to the trade terms by using the electronic currency.

7. The trade settlement system according to any one of claims 1 to 6, wherein
the settlement includes settlement that includes payment using virtual currency.

8. The trade settlement system according to claim 1, wherein
each of a shipper node, a consignee node, and a carrier node is configured by the one or more computers, the shipper node serving as a node of a shipper of the trade, the consignee node serving as a node of a consignee of the trade, the carrier node serving as a node of a carrier of the trade,
the settlement processing unit of the consignee node performs the settlement by remitting the consideration relating to the sale and purchase of the article to the settlement processing unit of the shipper node, and
the processing unit of the carrier node processes the change of name by changing a name of a predetermined shipping document from the shipper to the consignee, the predetermined shipping document including a bill of lading relating to the article to be sold or purchased in the trade.

9. The trade settlement system according to claim 1, wherein
each of a shipper node, a consignee node, and a carrier node is configured by the one or more computers, the shipper node serving as a node of a shipper of the trade, the consignee node serving as a node of a consignee of the trade, the carrier node serving as a node of a carrier of the trade,
the settlement processing unit of the consignee node performs the settlement by remitting the consideration relating to the sale and purchase of the article to the settlement processing unit of the shipper node,
the settlement processing unit of the shipper node performs the settlement by remitting freight of the trade to the settlement processing unit of the carrier node, and
the processing unit of the carrier node processes the change of name by changing a name of a predetermined shipping document from the shipper to the consignee, the predetermined shipping document including a bill of lading of the article to be sold or purchased in the trade.

10. The trade settlement system according to claim 1, wherein
each of a shipper node, a consignee node, and a carrier node is configured by the one or more computers, the shipper node serving as a node of a shipper of the trade, the consignee node serving as a node of a consignee of the trade, the carrier node serving as a node of a carrier of the trade,
the settlement processing unit of the consignee node performs the settlement by remitting the consideration relating to the sale and purchase of the article to the settlement processing unit of the shipper node, and performs the settlement by remitting freight of the trade to the settlement processing unit of the carrier node, and
the processing unit of the carrier node processes the change of name by changing a name of a predetermined shipping document from the shipper to the consignee, the predetermined shipping document including a bill of lading of the article to be sold or purchased in the trade.

11. The trade settlement system according to claim 9, wherein
an insurer node is configured by the one or more computers, the insurer node serving as a node of an insurer of the trade, and
the settlement processing unit of the shipper node performs the settlement by remitting the freight of the trade to the settlement processing unit of the carrier node, and remitting a cargo marine premium of the trade to the settlement processing unit of the insurer node.

12. The trade settlement system according to claim 9, wherein
an insurer node is configured by the one or more computers, the insurer node serving as a node of an insurer of the trade, and
the settlement processing unit of the consignee node performs the settlement by remitting the consideration relating to the sale and purchase of the article to the settlement processing unit of the shipper node, and remitting a cargo marine premium of the trade to the settlement processing unit of the insurer node.

13. The trade settlement system according to claim 10, wherein
an insurer node is configured by the one or more computers, the insurer node serving as a node of an insurer of the trade, and
the settlement processing unit of the consignee node performs the settlement by remitting the consideration relating to the sale and purchase of the article to the settlement processing unit of the shipper node, performs the settlement by remitting the freight of the trade to the settlement processing unit of the carrier node, and performs the settlement by remitting a cargo marine premium of the trade to the settlement processing unit of the insurer node.

14. A trade settlement method that uses one or more computers, wherein
each of the one or more computers performs,
for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase:
a settlement processing step of performing the settlement by using a smart contract on a blockchain; and
a processing step of processing the change of name by using the smart contract on the blockchain, in a case where the settlement has been successful.

15. A trade settlement program that uses one or more computers, wherein
the trade settlement program causes each of the one or more computers to perform,
for a bilateral contract including both obligations of a change of name from one party to another party of contract parties, the change of name accompanying a transfer of ownership of an article to be sold or purchased in a trade, and settlement using predetermined electronic money for a consideration relating to the sale and purchase:
a settlement processing step of performing the settlement by using a smart contract on a blockchain; and
a processing step of processing the change of name by using the smart contract on the blockchain, in a case where the settlement has been successful.
